# EUROPÄISCHE PATENTSCHRIFT

(11) **EP 3 275 067 B1**
(45) Veröffentlichungstag und Bekanntmachung des Hinweises auf die Patenterteilung: **23.01.2019**
(21) Anmeldenummer: 16706872.5
(22) Anmeldetag: 29.02.2016
(51) Int. Cl.: H02J 3/14

(54) **VERFAHREN ZUM VERBINDEN EINER ENERGIEERZEUGUNGSANLAGE MIT EINEM MITTELSPANNUNGSNETZ UND ENERGIEERZEUGUNGSANLAGE**
METHOD FOR CONNECTING AN ENERGY GENERATION INSTALLATION TO A MEDIUM VOLTAGE NETWORK AND ENERGY GENERATION INSTALLATION
PROCÉDÉ DE LIAISON D'UNE INSTALLATION DE PRODUCTION D'ÉNERGIE À UN RÉSEAU DE MOYENNE TENSION ET INSTALLATION DE PRODUCTION D'ÉNERGIE

(30) Priorität: 27.03.2015 DE 102015104783
(43) Veröffentlichungstag der Anmeldung: 31.01.2018
(73) Patentinhaber: SMA Solar Technology AG, 34266 Niestetal (DE)
(72) Erfinder: FALK, Andreas, 34131 Kassel (DE)
(86) Internationale Anmeldenummer: PCT/EP2016/054219
(87) Internationale Veröffentlichungsnummer: WO 2016/155959

(56) Entgegenhaltungen:
- DE-A1-102012 105 721

## Beschreibung

Die Erfindung betrifft ein Verfahren zum Verbinden einer Energieerzeugungsanlage mit einem Mittelspannungsnetz, bei der auf mindestens zwei Spannungswerte aus unterschiedlichen Spannungserfassungen zurückgegriffen wird, sowie eine entsprechende Energieerzeugungsanlage, die zum Netz- und Anlagenschutz mindestens zwei unterschiedliche Spannungserfassungen umfasst. Diese Spannungserfassungen erfassen Wechselspannungen. Bevorzugt kann die Energieerzeugungsanlage eine Anlage sein, die sich aus regenerativen Quellen speist, besonders bevorzugt kann es sich um eine Photovoltaikanlage handeln. Der Trend geht gegenwärtig zu immer größeren Photovoltaikanlagen, die dann in der Regel direkt in ein Mittelspannungsnetz einspeisen. Zwischen die Photovoltaikanlage und das Mittelspannungsnetz ist dann meist ein Mittelspannungstransformator geschaltet, da die Photovoltaikanlage selbst auf Niederspannungsniveau betrieben wird.

Im Stand der Technik bekannt sind Verfahren bei denen mehrere in Reihe geschaltete Schalter geschlossen werden müssen, um eine Photovoltaikanlage mit einem Mittelspannungsnetz zu verbinden. Dies ist ergibt sich beispielsweise aus unterschiedlichen Vorschriften oder Zuständigkeiten bezüglich der Schalter auf der Niederspannungsseite im Vergleich zu denen auf der Mittelspannungsseite. Die Schalter auf der Mittelspannungsseite können in der Regel seitens einer Steuerung der Photovoltaikanlage nicht betätigt werden, oft handelt es sich um rein manuell schaltbare Schaltanlagen. Diese bleiben im Normalbetrieb geschlossen und werden nur bei Fehlern und für Wartungsarbeiten geöffnet. In vielen Fällen ist das Wartungspersonal nicht zum Schalten der Mittelspannungsschaltanlage berechtigt.

Sind auf der Mittelspannungsseite und auf der auf der Niederspannungsseite jeweils mindestens ein Schalter vorhanden, so kann der Schalter auf der Mittelspannungsseite geschlossen bleiben, und zur Verbindung der Photovoltaikanlage mit dem Mittelspannungsnetz dient dann der Schalter auf der Niederspannungsseite. Dieser Schalter auf der Niederspannungsseite kann von der Steuerung der Photovoltaikanlage angesteuert werden, in der Regel sind dies teure motorisch betriebene Schalter, da über diese große Ströme fließen. Meist sind in diesem Fall auf beiden Seiten des Schalters Spannungserfassung vorgesehen, da auch bei geöffnetem Schalter beispielsweise die Spannungshöhe der Netzspannung ermittelt werden muss, um festzustellen, ob eine Zuschaltung zum Netz möglich ist.

Speziell darf nur bei Vorliegen der normativ vorgegebenen Netzanschluss- und Synchronisationsbedingungen (Amplituden- und Phasengleichheit von Netz und einzuspeisender Spannung) zugeschaltet werden.

Anschlussnormen geben auch vor, mit welcher Genauigkeit eine Überprüfung beispielsweise der Netzspannung erfolgen muss. Auf der Mittelspannungsseite ist aus Sicherheitsgründen meist eine weitere Spannungserfassung vorgesehen, oft handelt es hier um eine Spannungserfassung mit einem kapazitiven Spannungsteiler. Eine solche Spannungserfassung mit einem kapazitiven Spannungsteiler unterliegt normalerweise weniger hohen Genauigkeitsanforderungen, sollte aber aus Sicherheitsgründen zumindest anzeigen, ob beispielsweise 50% der Netzspannung anliegt.

Nachteilig an diesem Aufbau ist die Vielzahl an Spannungserfassungen, die Stromwärmeverluste im Niederspannungsschalter, sowie die Kosten des Schalters auf der Niederspannungsseite.

Aus der DE 10 2013 202 868 A1 ist Spannungsmessanordnung mit einer Referenz-Spannungsmessvorrichtung die auf eine höhere Messgenauigkeit ausgelegt ist als eine kapazitive Spannungsmessvorrichtung vorbekannt. Die Messstelle der Referenz-Spannungsmessvorrichtung befindet sich in einem anderen Feld oder an der Sammelschiene in jedem Fall aber in galvanischer Verbindung mit der Messstelle an dem die kapazitive Spannungsmessung vorgenommen wird.

DE 10 2012 105 721 A1 derselben Anmelderin offenbart ein Verfahren zum Steuern einer Mehrzahl von eingangsseitig an jeweils eine Stromquelle und ausgangsseitig an einen gemeinsamen Netzübergabepunkt angeschlossenen Wechselrichtern, bei dem elektrische Größen an dem Netzübergabepunkt gemessen und zeitgleich mit den an den einzelnen Wechselrichtern gemessenen elektrischen Größen in Beziehung gesetzt werden.

DD 2 05 257 A1 beschreibt eine Hochspannungsmesseinrichtung mit einem kapazitiven Spannungsteiler, wobei die Spannungswerte anschließend mittels einer Verstärkerschaltung für eine analoge Datenübertragung verstärkt werden.

Um den teuren motorisch betriebenen Schalter auf der Niederspannungsseite einzusparen, ist es bekannt, einen motorisch betriebenen Mittelspannungsleistungsschalter vorzusehen und diesen zur Verbindung der Photovoltaikanlage mit dem Mittelspannungsnetz zu nutzen. Da auf der Mittelspannungsseite wegen des höheren Spannungsniveaus bei gleicher Leistung geringere Ströme benötigt werden, bietet der motorisch betriebene Mittelspannungsleistungsschalter Kostenvorteile. In diesem Fall muss die Spannungserfassung auf der Mittelspannungsseite höheren Genauigkeitsanforderungen genügen. Vor Zuschaltung der Photovoltaikanlage, also bei geöffnetem Mittelspannungsleistungsschalter, müssen die Netzanschlussnormen mit ausreichender Genauigkeit überprüfbar sein. Zu diesem Zweck werden Spannungserfassungen eingesetzt, die einen Trenntransformator enthalten. Sie setzen die Mittelspannung so weit herab, dass sie mittels gängiger Methoden mit hoher Genauigkeit gemessen werden kann. Solche Spannungserfassungen mit Trenntransformatoren sind aber wegen der hohen Isolierspannung groß und teuer.

Der Erfindung liegt die Aufgabe zugrunde, ein Verfahren zum Verbinden einer Energieerzeugungsanlage mit einem Mittelspannungsnetz aufzuzeigen, das die erwähnten Nachteile überwindet. Des Weiteren soll eine Energieerzeugungsanlage angegeben werden, die mit wenigen kostengünstigen Schaltern und Spannungserfassungen auskommt und trotzdem allen Vorgaben hinsichtlich des Netz- und Anlagenschutzes gerecht wird.

Diese Aufgabe wird gelöst durch ein Verfahren nach Anspruch 1, sowie einer Photovoltaikanlage nach Anspruch 4. Bevorzugte Ausführungsformen des erfindungsgemäßen Verfahrens und der erfindungsgemäßen Photovoltaikanlage sind in den abhängigen Patentansprüchen definiert.

Ein erfindungsgemäßes Verfahren zum Verbinden einer Energieerzeugungsanlage mit einem Mittelspannungsnetz umfassend folgende Schritte: Es wird ein Kalibrierfaktor durch eine Steuerung der Energieerzeugungsanlage bestimmt, der während eines Leerlaufzustandes eines Mittelspannungstransformators erste Spannungswerte auf zweite Spannungswerte abstimmt. Dabei werden die ersten Spannungswerte an einem kapazitiven Spannungsteiler, angeordnet auf der Mittelspannungsseite des Mittelspannungstransformators, erfasst. Die zweiten Spannungswerte werden an einer Spannungserfassung, angeordnet auf der Niederspannungsseite des Mittelspannungstransformators, erfasst. Die die Steuerung der Energieerzeugungsanlage schließt einen Trennschalter zum Verbinden einer Energieerzeugungsanlage mit einem Mittelspannungsnetz, wenn an dem kapazitiven Spannungsteiler ermittelte Spannungswerte nach Anwendung des Kalibrierfaktors einen ersten Schwellwert überschreiten. Dabei ist der Trennschalter auf der Mittelspannungsseite des Mittelspannungstransformators angeordnet.

Die Spannungserfassung, angeordnet auf der Niederspannungsseite des Mittelspannungstransformators, ist üblicherweise eine dreiphasige Messung, die die Spannungen mit einer Toleranz von weniger als 1% Abweichung bestimmt. Diese Messung ist notwendig, um für die Steuerung der Energieerzeugungsanlage Spannungswerte zur Verfügung zu stellen, die vor dem Verbinden einer Energieerzeugungsanlage mit einem Mittelspannungsnetz die Beurteilung der Netzanschlussbedingungen zulassen (Netz-und Anlagenschutz), insbesondere muss die einzuspeisende Spannung innerhalb eines vorgegebenen Wertebereiches liegen.

Anschließend kann es erforderlich sein, die von der Energieerzeugungsanlage bereitgestellte Wechselspannung auf die entsprechenden Werte des Mittelspannungsnetzes zu synchronisieren. Bei einer solchen synchronen Zuschaltung fließen keine bzw. nur sehr kleine Ausgleichströme, so dass die Betriebsmittel und das Netz nur wenig oder gar nicht belastet werden. Die Messwerte dieser Spannungserfassung, angeordnet auf der Niederspannungsseite, müssen mit hoher Genauigkeit vorliegen, damit die Einspeisung von netzkonformer Energie in das Mittelspannungsnetz gewährleistet werden kann.

Die ersten Spannungswerte, die an dem kapazitiven Spannungsteiler, angeordnet auf der Mittelspannungsseite des Mittelspannungstransformators, erfasst werden, sind mit höheren Messtoleranzen behaftet. In Fall eines dreiphasigen Netzes handelt es sich auch hier in der Regel um eine dreiphasige Messung, das heißt es ist für jede Phase des Netzes ein kapazitiver Spannungsteiler vorhanden.

Erfindungsgemäß werden die ersten Spannungswerte mittels der zweiten Spannungswerte kalibriert, wodurch die ersten Spannungswerte mit einer höheren Genauigkeit vorliegen und als Referenzwerte zum Verbinden einer Energieerzeugungsanlage mit einem Mittelspannungsnetz verwendbar werden. Die Steuerung der Energieerzeugungsanlage kann die kalibrierten ersten Spannungswerte mit den zweiten Spannungswerten vor der Zuschaltung der Energieerzeugungsanlage zum Mittelspannungsnetz vergleichen. Ab einer Mindestspannung im Mittelspannungsnetz kann die Steuerung eine Zuschaltung der Energieerzeugungsanlage zum Mittelspannungsnetz mittels eines bevorzugt motorisch angetriebenen Trennschalters realisieren. Die Kalibrierung der ersten Spannungswerte mittels der zweiten Spannungswerte erfolgt während eines Leerlaufzustandes des Mittelspannungstransformators. Im Leerlaufzustand des Mittelspannungstransformators findet kein Energiefluss zwischen der Energieerzeugungsanlage und dem Netz statt. In diesem Fall ist der Spannungsabfall über den Streuinduktivitäten des Transformators praktisch Null und die Spannungen auf beiden Seiten des Transformators stimmen in Phase und Amplitude (entsprechend des Übersetzungsverhältnisses angepasst) überein.

Da die Energieeinspeisung von der Steuerung der Energieerzeugungsanlage gesteuert wird, kann diese Steuerung auch den Leerlaufzustand des Mittelspannungstransformators feststellen und damit den Zeitpunkt der Kalibration der ersten Spannungswerte festlegen.

In einer Ausführungsform des erfindungsgemäßen Verfahrens werden die ersten Spannungswerte mittels eines Verstärkers verstärkt, um eine störunempfindliche Übertragung der ersten Spannungswerte zu ermöglichen.

In einer weiteren Ausführungsform des erfindungsgemäßen Verfahrens werden die verstärkten ersten Spannungswerte mittels einer analogen Datenübertragung an die Steuerung der Energieerzeugungsanlage übertragen.

Eine erfindungsgemäße Photovoltaikanlage umfasst einen Photovoltaik-Wechselrichter der eingangsseitig an einen Photovoltaik-Generator angeschlossen ist, wobei der Photovoltaik-Wechselrichter mit seinem Ausgang schalterlos an eine Niederspannungsseite eines Mittelspannungstransformators angeschlossen ist. Weiter umfasst die Photovoltaikanlage einen kapazitiven Spannungsteiler, angeordnet auf einer Mittelspannungsseite des Mittelspannungstransformators, zur Erfassung von ersten Spannungswerten, eine Spannungserfassung, angeordnet auf der Niederspannungsseite des Mittelspannungstransformators, zur Erfassung von zweiten Spannungswerten und einen Trennschalter angeordnet auf der Mittelspannungsseite des Mittelspannungstransformators, der dazu geeignet ist, den Ausgang des PV-Wechselrichters mit einem Mittelspannungsnetz zu verbinden. Weiter umfasst die Photovoltaikanlage eine Kalibriereinheit zur Abstimmung der ersten Spannungswerte auf die zweiten Spannungswerte während eines Leerlaufzustandes des Mittelspannungstransformators und eine Steuerung zum Ansteuern des Trennschalters, wenn an dem kapazitiven Spannungsteiler ermittelte, und mittels der Kalibriereinheit abgestimmte Spannungswerte einen ersten Schwellwert überschreiten.

In einer vorteilhaften Ausführungsform umfasst die erfindungsgemäße Photovoltaikanlage einen Verstärker zur Verstärkung der ersten Spannungswerte.

Zwischen der Mittelspannungsschaltstation, in der der Trennschalter sowie der kapazitiven Spannungsteiler angeordnet sein können, und der Steuerung der Photovoltaikanlage liegen in der Regel große geographische Distanzen, so dass eine Verstärkung zur störunempfindliche Übertragung der ersten Spannungswerte nötig sein kann.

In einer weiteren vorteilhaften Ausführungsform umfasst die erfindungsgemäße Photovoltaikanlage eine analoge Datenübertragung zur Übertragung der verstärkten ersten Spannungswerte an die Steuerung der Photovoltaikanlage.

In einer weiteren vorteilhaften Ausführungsform umfasst die Steuerung der erfindungsgemäßen Photovoltaikanlage auch die Kalibriereinheit. Auch können Steuerung und Kalibriereinheit in den Photovoltaik-Wechselrichter integriert sein.

Im Folgenden wird die Erfindung anhand eines Ausführungsbeispiels mit Hilfe einer Figur näher erläutert.

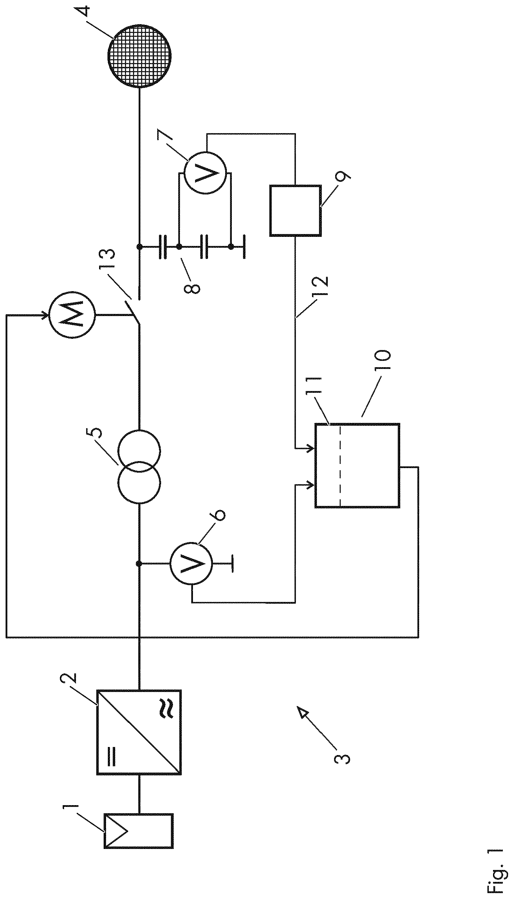

- Figur 1: zeigt eine schematische Darstellung einer erfindungsgemäßen Photovoltaikanlage.

Figur 1 zeigt als Ausführungsbeispiel einen Photovoltaik-Generator 1 verbunden mit einem DC-Eingang eines Photovoltaik-Wechselrichters 2. In einer realen Umsetzung kann der Photovoltaik-Generator 1 aus einer Vielzahl von seriell- und parallel verschalteten Einzelmodulen bestehen, auch kann zusätzlich oder anstelle des Photovoltaik-Generators 1 eine andere Quelle von Gleichspannung, eine Batterie oder ähnliches an den DC-Eingang eines Photovoltaik-Wechselrichter 2 angeschlossen sein. Der Photovoltaik-Wechselrichter 2 wandelt die DC-Leistung des Photovoltaik-Generators 1 in eine AC-Leistung an seinem AC-Ausgang um, die in ein Mittelspannungsnetz 4 eingespeist werden kann. In der Regel handelt es sich hierbei um ein dreiphasiges Netz. Der AC-Ausgang des Photovoltaik-Wechselrichters 2 ist ohne Zwischenschaltung von weiteren Schaltorganen an die Niederspannungsseite eines Mittelspannungstransformators 5 angeschlossen. Mittelspannungsseitig ist zwischen den Mittelspannungstransformator 5 und das Mittelspannungsnetz 4 ein Trennschalter 13 angeordnet. Hierbei kann es sich um einen Leistungsschalter handeln, der auch Kurzschlussströme zu trennen vermag, oder einen Lasttrennschalter, der lediglich normale Lastströme tragen kann. Durch das Fehlen eines niederspannungsseitigen Trennschalters kann die gesamte Energieerzeugungsanlage nur durch den Trennschalter 13 vom Netz getrennt werden. Der Trennschalter kann auch zwei in Serie angeordnete und unabhängig betätigte Teilschalter aufweisen.

Zur Regelung der von der Photovoltaikanlage 3 erzeugten Spannung und zur Abstimmung dieser auf die Spannung im Mittelspannungsnetz 4 verfügt die Photovoltaikanlage 3 über eine niederspannungsseitig angeordnete Spannungserfassung 6, die mit hoher Genauigkeit die Spannungsverhältnisse am AC-Ausgang des Photovoltaik-Wechselrichter 2 messen kann. Die von der Spannungserfassung 6 gemessenen Werte werden digital oder analog an die Steuerung 10 übermittelt, die den Photovoltaik-Wechselrichter 2 regelt.

Vor dem Zuschalten der Photovoltaikanlage 3, also bei geöffnetem Trennschalter 13 kann aber an der Spannungserfassung 6 keine Messung der Spannungsverhältnisse im Mittelspannungsnetz 4 vorgenommen werden. Ein mittelspannungsseitig oft vorhandener kapazitiver Spannungsteiler 8 dient in der Regel zur Information des Wartungspersonals und ist in der Regel für alle Netzphasen vorhanden und hat häufig nur den Zweck, dem Bedienpersonal der Mittelspannungsschaltanlage anzuzeigen, ob Spannung an der Anlage vorhanden ist, sie besteht nur aus einer optischen Anzeige mit einem kleinen LCD-Display. Diese Art der Spannungsmessung an einem kapazitiven Spannungsteiler 8 ist kostengünstig, aber mit einer großen Fehlertoleranz behaftet. Um nun vor dem Zuschalten der Photovoltaikanlage 3 zum Mittelspannungsnetz 4 eine verlässliche Aussage über die Spannungsverhältnisse im Mittelspannungsnetz 4 zu erhalten, werden erfindungsgemäß mit einer Spannungserfassung 7 an dem kapazitiven Spannungsteiler 8 erste Spannungswerte ermittelt und mit Hilfe von zweiten Spannungswerten, die an der Spannungserfassung 6 erfasst werden, kalibriert. Dazu werden die von der Spannungserfassung 7 erfassten Werte beispielsweise als analoger Spannungswert an die Steuerung 10 übermittelt. Die Steuerung 10 regelt dazu bei geschlossenem Trennschalter 13 den Betrieb des Photovoltaik-Wechselrichters 2 so, dass Amplitude und Phase der vom Photovoltaik-Wechselrichter 2 erzeugten Spannung genau mit Amplitude und Phase des Mittelspannungsnetzes 4 übereinstimmen und somit keine Leistung ins Mittelspannungsnetz 4 fließt. Alternativ kann bei einem stromgeregelten Wechselrichter der ins Netz eingespeiste Strom zu Null geregelt werden. Dies wird auch als Leerlaufbetrieb von Photovoltaik-Wechselrichter 2 und Mittelspannungstransformators 5 bezeichnet. Da kein Strom fließt, findet an den Wicklungen des Mittelspannungstransformators 5 kein Spannungsabfall statt und auf beiden Seiten des Mittelspannungstransformators 5 liegt dieselbe Spannung an (unter Berücksichtigung des Übersetzungsverhältnisses des Mittelspannungstransformators). Daher kann in dieser Konfiguration eine Kalibrierung der beiden Spannungsmessungen erfolgen. Empfängt die Steuerung 10 in dieser Konfiguration von dem kapazitiven Spannungsteiler 8 beispielsweise einen Messwert von 20 V und wird an Spannungserfassung 6 ein Spannungswert von 500 V gemessen und das Übersetzungsverhältnis des Mittelspannungstransformators 5 beträgt 1:40, so wird ein Kalibrierfaktor von (500/20) x 40 = 1000 ermittelt. Ein vom kapazitiven Spannungsteiler 8 erfasster Wert von 20 V entspricht dann einer Spannungsamplitude im Mittelspannungsnetz von 20.000 V.

Die Kalibrierung kann auch von einer separaten Kalibriereinheit 11 vorgenommen werden, die aber auch als Teil der Steuerung 10 ausgeführt sein kann.

Zwischen dem Ort der Spannungserfassung 7, also beispielsweise der Mittelspannungsschaltstation, und dem Photovoltaik-Wechselrichter 2 liegen in der Regel größere Distanzen. Um eine für Störsignale unempfindliche Übertragung der Messwerte des kapazitiven Spannungsteilers 8 zu gewährleisten wird es meist nötig sein, das Messsignal, das an dem einen Kondensator des kapazitiven Spannungsteilers 8 durch die Spannungserfassung 7 gewonnen wird, zu verstärken. Verstärker 9 kann ein Operationsverstärker sein, der das Spannungssignal an dem Kondensator verstärkt, ohne diesen zu belasten. Vorteilhaft kann deshalb der Operationsverstärker als Impedanzwandler ausgeführt sein. Dazu muss die Operationsverstärkerschaltung mit einer unabhängigen Versorgungsspannung, beispielsweise mit 24 V aus dem Photovoltaik-Wechselrichter 2, versorgt werden.

Vor Erstinbetriebnahme der Anlage, wenn also noch kein Kalibrierfaktor für die Photovoltaikanlage 3 ermittelt wurde, kann folgendermaßen vorgegangen werden:
Der Trennschalter 13 wird geschlossen, wenn erkennbar ist, dass das Mittelspannungsnetzes 4 nicht gestört ist, dies kann beispielsweise manuell durch das Bedienpersonal erfolgen. Der Photovoltaik-Wechselrichter 2 stellt an seinem AC-Ausgang eine Spannung ein, die nach Übersetzung durch den Mittelspannungstransformator 5 der Nennbetriebsspannung des Mittelspannungsnetzes 4 entspricht. Direkt nach dem Zuschalten können die von der Spannungserfassung 6 gemessenen Spannungs- und Frequenzwerte mit den zulässigen Bereichen verglichen werden, die in den Netzanschlussbedingungen festgelegt sind. Falls die Werte die normativen Vorgaben nicht erfüllen, wird der Trennschalter 13 wieder geöffnet. Nach dem Zuschalten wird eine Kalibrierung wie oben beschrieben durchgeführt.

### Bezugszeichenliste

- 1: Photovoltaik-Generator
- 2: Photovoltaik-Wechselrichter
- 3: Photovoltaikanlage
- 4: Mittelspannungsnetz
- 5: Mittelspannungstransformator
- 6: Spannungserfassung
- 7: Spannungserfassung
- 8: kapazitiver Spannungsteiler
- 9: Verstärker
- 10: Steuerung
- 11: Kalibriereinheit
- 12: Datenübertragung
- 13: Trennschalter

## Patentansprüche

1. Verfahren zum Verbinden einer Energieerzeugungsanlage (3) mit einem Mittelspannungsnetz (4), **gekennzeichnet durch** folgende Schritte:
- Erfassen, während eines Leerlaufzustandes eines zwischen Energieerzeugungsanlage (3) und Mittelspannungsnetz (4) angeordneten Mittelspannungstransformators (5), von ersten Spannungswerten an einem kapazitiven Spannungsteiler (8), angeordnet auf der Mittelspannungsseite des Mittelspannungstransformators (5), und von zweiten Spannungswerten an einer Spannungserfassung (6), angeordnet auf der Niederspannungsseite des Mittelspannungstransformators (5),
- Bestimmen eines Kalibrierfaktors zur Kalibrierung erster Spannungswerte durch zweite Spannungswerte, basierend auf den erfassten ersten und zweiten Spannungswerten, durch eine Steuerung (10) der Energieerzeugungsanlage (3),
- Ermitteln von Spannungswerten an dem kapazitiven Spannungsteiler (8) und Bestimmen von kalibrierten Spannungswerten aus den ermittelten Spannungswerten durch Anwendung des bestimmten Kalibrierfaktors, und
- Schließen eines Trennschalters (13), angeordnet auf der Mittelspannungsseite des Mittelspannungstransformators (5), durch die Steuerung (10) der Energieerzeugungsanlage (3), wenn die kalibrierten Spannungswerte einen ersten Schwellwert überschreiten.

2. Verfahren nach Anspruch 1, wobei die ersten Spannungswerte mittels eines Verstärkers (9) verstärkt werden.

3. Verfahren nach Anspruch 2, wobei die verstärkten ersten Spannungswerte mittels einer analogen Datenübertragung (12) an die Steuerung (10) der Energieerzeugungsanlage (3) übertragen werden.

4. Photovoltaikanlage (3) umfassend
- einen Photovoltaik-Wechselrichter (2), eingangsseitig angeschlossen an einen Photovoltaik-Generator (1),
- einen kapazitiven Spannungsteiler (8), angeordnet auf einer Mittelspannungsseite eines Mittelspannungstransformators (5), zur Erfassung von ersten Spannungswerten,
- eine Spannungserfassung (6), angeordnet auf einer Niederspannungsseite des Mittelspannungstransformators (5), zur Erfassung von zweiten Spannungswerten,
- einen Trennschalter (13), angeordnet auf der Mittelspannungsseite des Mittelspannungstransformators (5) und geeignet, den Ausgang des PV-Wechselrichters (2) mit einem Mittelspannungsnetz (4) zu verbinden, **gekennzeichnet durch**:
- eine Kalibriereinheit (11) zur Bestimmung eines Kalibrierfaktors zur Kalibrierung erster Spannungswerte durch zweite Spannungswerte, basierend auf während eines Leerlaufzustandes des Mittelspannungstransformators (5) erfassten ersten und zweiten Spannungswerten, und zur Ermittlung kalibrierter Spannungswerte aus erfassten Spannungswerten durch Anwendung des bestimmten Kalibrierfaktors, und
- eine Steuerung (10) zum Ansteuern des Trennschalters (13), wenn am kapazitiven Spannungsteiler (8) erfasste und mittels der Kalibriereinheit (11) kalibrierte Spannungswerte einen ersten Schwellwert überschreiten,
wobei der Photovoltaik-Wechselrichter (2) mit seinem Ausgang schalterlos an die Niederspannungsseite des Mittelspannungstransformators (5) angeschlossen ist.

5. Photovoltaikanlage (3) nach Anspruch 4, weiter umfassend einen Verstärker (9) zur Verstärkung der ersten Spannungswerte.

6. Photovoltaikanlage (3) nach Anspruch 5, weiter umfassend eine analoge Datenübertragung (12) zur Übertragung der verstärkten ersten Spannungswerte an die Steuerung (10) der Photovoltaikanlage (3).

7. Photovoltaikanlage (3) nach Anspruch 4, wobei die Steuerung (10) die Kalibriereinheit (11) umfasst.

## Claims

1. A method for connecting an energy generation installation (3) to a medium-voltage grid (4), **characterized by** the following steps:
- detecting, during an idle state of a medium-voltage transformer (5) arranged between the energy generation installation (3) and the medium-voltage grid (4), first voltage values at a capacitive voltage divider (8), arranged on the medium-voltage side of the medium-voltage transformer (5), and second voltage values at a voltage detection means (6) arranged on the low-voltage side of the medium-voltage transformer (5),
- determining a calibration factor for calibrating first voltage values using second voltage values based on the detected first and second voltage values by a controller (10) of the energy generation installation (3),
- obtaining voltage values at the capacitive voltage divider (8) and determining calibrated voltage values from the obtained voltage values by applying the determined calibration factor, and
- closing a circuit breaker (13) arranged on the medium-voltage side of the medium-voltage transformer (5) by the controller (10) of the energy generation installation (3) when the calibrated voltage values exceed a first threshold value.

2. The method as claimed in claim 1, wherein the first voltage values are amplified by means of an amplifier (9).

3. The method as claimed in claim 2, wherein the amplified first voltage values are transmitted to the controller (10) of the energy generation installation (3) by means of an analog data transmission means (12).

4. A photovoltaic installation (3), comprising:
- a photovoltaic inverter (2) connected on the input side to a photovoltaic generator (1),
- a capacitive voltage divider (8) arranged on a medium-voltage side of a medium-voltage transformer (5) for detecting first voltage values,
- a voltage detection means (6) arranged on a low-voltage side of the medium-voltage transformer (5) for detecting second voltage values,
- a circuit breaker (13) arranged on the medium-voltage side of the medium-voltage transformer (5) and suitable for connecting the output of the PV inverter (2) to a medium-voltage grid (4),
**characterized by**:
- a calibration unit (11) for determining a calibration factor for calibrating first voltage values using second voltage values, based on first and second voltage values obtained during an idle state of the medium-voltage transformer (5), and for determining calibrated voltage values from the obtained voltage values by applying the determined calibration factor, and
- a controller (10) for actuating the circuit breaker (13) when voltage values detected at the capacitive voltage divider (8) and calibrated by means of the calibration unit (11) exceed a first threshold value,
wherein the photovoltaic inverter (2) is connected by its output without a switch to the low-voltage side of the medium-voltage transformer (5).

5. The photovoltaic installation (3) as claimed in claim 4, further comprising an amplifier (9) for amplifying the first voltage values.

6. The photovoltaic installation (3) as claimed in claim 5, further comprising an analog data transmission means (12) for transmitting the amplified first voltage values to the controller (10) of the photovoltaic installation (3).

7. The photovoltaic installation (3) as claimed in claim 4, wherein the controller (10) comprises the calibration unit (11).

## Revendications

1. Procédé servant à raccorder une installation de production d'énergie (3) à un réseau de moyenne tension (4), **caractérisé en ce qu'**il comprend les étapes suivantes :
- détecter, dans un état de circuit à vide d'un transformateur à moyenne tension (5) disposé entre l'installation de production d'énergie (3) et le réseau à moyenne tension (4), des premières valeurs de tension sur un diviseur de tension capacitif (8) disposé du côté à moyenne tension du transformateur à moyenne tension (5) et des secondes valeurs de tension sur un dispositif détecteur de tension (6) disposé du côté à basse tension du transformateur à moyenne tension (5),
- déterminer un facteur d'étalonnage au moyen d'un dispositif de commande (10) de l'installation de production d'énergie (3) pour étalonner des premières valeurs de tension avec des secondes valeurs de tension sur la base des premières et secondes valeurs de tension détectées,
- obtenir des valeurs de tension sur le diviseur de tension capacitif (8) et déterminer des valeurs de tension étalonnées à partir des valeurs de tension obtenues en appliquant le facteur d'étalonnage déterminé, et
- fermer, au moyen du dispositif de commande (10) de l'installation de production d'énergie (3), un sectionneur (13) disposé du côté à moyenne tension du transformateur à moyenne tension (5) lorsque les valeurs de tension étalonnées dépassent une première valeur de seuil.

2. Procédé selon la revendication 1, dans lequel les premières valeurs de tension sont amplifiées au moyen d'un amplificateur (9).

3. Procédé selon la revendication 2, dans lequel les premières valeurs de tension amplifiées sont transmises au dispositif de commande (10) de l'installation de production d'énergie (3) au moyen d'un dispositif de transmission de données analogique (12).

4. Installation photovoltaïque (3) comprenant
- un onduleur photovoltaïque (2), raccordé en entrée à un générateur photovoltaïque (1),
- un diviseur de tension capacitif (8) disposé sur un côté à moyenne tension d'un transformateur à moyenne tension (5) et destiné à détecter des premières valeurs de tension,
- un dispositif de détection de tension (6) disposé sur un côté à basse tension du transformateur à moyenne tension (5) et destiné à détecter des secondes valeurs de tension,
- un sectionneur (13) disposé du côté à moyenne tension du transformateur à moyenne tension (5) et adapté pour connecter la sortie de l'onduleur PV (2) à un réseau à moyenne tension (4),
**caractérisé par** :
- une unité d'étalonnage (11) destinée à déterminer un facteur d'étalonnage permettant d'étalonner des premières valeurs de tension avec des secondes valeurs de tension sur la base de premières et secondes valeurs de tension détectées pendant un état de repos du transformateur à moyenne tension (5), et à obtenir des valeurs de tension étalonnées à partir de valeurs de tension détectées en appliquant le facteur d'étalonnage déterminé, et
- un dispositif de commande (10) destiné à actionner le sectionneur (13) lorsque des valeurs de tension détectées sur le diviseur de tension capacitif (8) et étalonnées au moyen de l'unité d'étalonnage (11) dépassent une première valeur de seuil,
dans lequel l'onduleur photovoltaïque (2) est raccordé sans commutateur par sa sortie au côté à basse tension du transformateur à moyenne tension (5).

5. Installation photovoltaïque (3) selon la revendication 4 comprenant en outre un amplificateur (9) destiné à amplifier les premières valeurs de tension.

6. Installation photovoltaïque (3) selon la revendication 5, comprenant en outre un dispositif de transmission de données analogique (12) destiné à transmettre les premières valeurs de tension amplifiées au dispositif de commande (10) de l'installation photovoltaïque (3).

7. Installation photovoltaïque (3) selon la revendication 4, dans laquelle le dispositif de commande (10) comprend l'unité d'étalonnage (11).
